# EUROPÄISCHE PATENTSCHRIFT

(11) **EP 3 232 125 B1**
(45) Veröffentlichungstag und Bekanntmachung des Hinweises auf die Patenterteilung: **12.06.2019**
(21) Anmeldenummer: 17166272.9
(22) Anmeldetag: 12.04.2017
(51) Int. Cl.: F23M 7/02

(54) **REINIGUNGSTÜR FÜR EIN ABGASROHR, INSBESONDERE FÜR EIN KAMINROHR**
CLEANING DOOR FOR AN EXHAUST PIPE, IN PARTICULAR FOR A CHIMNEY PIPE
PORTE DE NETTOYAGE POUR UN TUYAU D'ÉCHAPPEMENT, EN PARTICULIER POUR UN CONDUIT DE CHEMINÉE

(30) Priorität: 15.04.2016 DE 202016002374 U
(43) Veröffentlichungstag der Anmeldung: 18.10.2017
(73) Patentinhaber: Bernhard Poll Schornsteintechnik GmbH, 26892 Dörpen/Ems (DE)
(72) Erfinder: POLL, Rainer, 26892 Dörpen (DE); SCHULTE, Werner, 49762 Neusustrum (DE)
(74) Vertreter: Jabbusch, Matthias

(56) Entgegenhaltungen:
- FR-A1- 3 021 732
- GB-A- 1 557 861
- US-A- 2 507 885

## Beschreibung

Die Erfindung betrifft eine Reinigungstür für ein im Wesentlichen zylinderförmiges Abgasrohr, insbesondere für ein Kaminrohr bzw. für einen Kaminrohrabschnitt, mit einem Türrahmen zum Aufnehmen zumindest eines Türblattes.

Reinigungstüren der eingangs genannten Gattung werden in Abgasrohren angeordnet, um einen Zugang in das Abgasrohr zu ermöglichen. Bei derartigen Abgasrohren kann es sich beispielsweise um Kaminrohre von Heizkesseln oder auch von Kleinfeueranlagen handeln, die beispielsweise für den Schornsteinfeger regelmäßig zu inspizieren sind.

Damit beispielsweise der Schornsteinfeger in das Innere des Abgasrohrs hineinblicken kann und ggf. auch Reinigungswerkzeuge einführen kann, sind gattungsgemäße Reinigungstüren bereits vorgeschlagen worden. Neben solchen, bei denen nur ein Türblatt direkt an der Außenhaut des Abgasrohres befestigt wird, sind auch gattungsgemäße Reinigungstüren vorgeschlagen worden, die einen Türrahmen umfassen. Das Türblatt ist am Türrahmen aufgenommen, der Türrahmen ist mit dem Abgasrohr verbunden. Das erfolgt im Stand der Technik regelmäßig über etwa quaderförmige Gehäuse. Diese werden in das Abgasrohr eingeformt und tragen dann den Türrahmen mit dem Türblatt. Diese Herstellungsweise ist aufwendig.

Dokument FR 3 021 732 A1 offenbart eine Vorrichtung gemäß dem Oberbegriff des unabhängigen Anspruchs 1.

Dokument GB 1 557 861 A offenbart ein Türblatt, das an seiner dem Türrahmen anzunähernden Seite ein Gehäuse trägt und das mit einem Wärmeisoliermaterial gefüllt ist.

Der Erfindung liegt die Aufgabe zugrunde, eine Reinigungstür für ein Abgasrohr aufzuzeigen, die einfacher konstruiert ist.

Diese Aufgabe wird erfindungsgemäß durch eine Vorrichtung gemäß Anspruch 1 erreicht.

Die erfindungsgemäße Reinigungstür kann sich aufgrund der gebogenen Ausbildung von Türrahmen und Türblatt an den äußeren Verlauf des Abgasrohrs anschmiegen. Der Türrahmen kann direkt auf die Außenseite des Abgasrohrs aufgelegt werden, ein separat anzufertigender Kasten, der aufwendig mit dem Abgasrohr gasdicht zu verbinden ist, ist nicht weiter erforderlich. Der Türrahmen wird in seiner Anlage an dem Abgasrohr an diesem befestigt, das Türblatt wird wie im Stand der Technik am Türrahmen angeschlagen, vorzugsweise schwenkbar angelengt.

Die Herstellung der erfindungsgemäßen Reinigungstür ist vereinfacht, die Reinigungstür besteht im Wesentlichen nur aus den Bauteilen Türrahmen und Türblatt. Optisch gefällig ist die erfindungsgemäße Reinigungstür insoweit, wie sie sich eng an den rohrförmigen Verlauf des Abgasrohrs anpasst. Das Türblatt kann Mittel zu seinem Verschließen am Türrahmen aufweisen. Die Mittel können so ausgestattet sein, dass nur berechtigte Personen in der Lage sind das Türblatt zu öffnen.

Türblatt und/oder Türrahmen sind vorzugsweise mit Dichtelementen ausgerüstet, so dass sichergestellt ist, dass bei geschlossener Reinigungstür kein Abgas durch die Reinigungstür nach außen austritt

Das Befestigen des Türrahmens am Abgasrohr kann beispielsweise durch Nietverbindungen erfolgen. Diese bilden eine dauerhafte und stabile Verbindung zwischen Türrahmen und Abgasrohr aus. Andere Verbindungen sind natürlich möglich.

Ein Ausführungsbeispiel, aus dem sich weitere erfinderische Merkmale ergeben, ist in der Zeichnung dargestellt. Es zeigen:
- Figur 1:: eine perspektivische Ansicht eines Kaminrohrabschnitts mit einer erfindungsgemäßen Reinigungstür;
- Figur 2:: eine Draufsicht auf den Kaminrohrabschnitt nach Figur 1; und
- Figur 3:: eine Längsmitte-Schnittansicht des Kaminrohrabschnittes gemäß Figur 1.

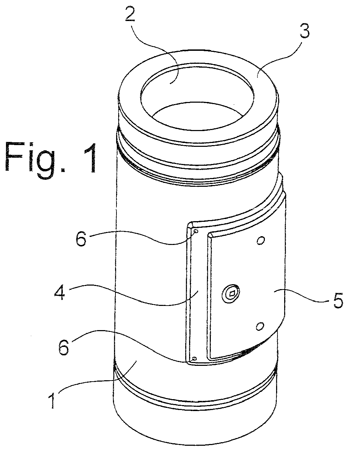

Der in Figur 1 gezeigte Kaminrohrabschnitt weist äußeres Rohr 1 sowie ein inneres Rohr 2 auf. Der Durchmesser des inneren Rohrs 2 ist kleiner als der Durchmesser des äußeren Rohrs 1, so dass das innere Rohr 2 in das äußere Rohr 1 eingeführt ist. Der Abstand zwischen beiden Rohren 1 und 2 ist mit einem Wärmeisoliermaterial 3 aufgefüllt.

Der dargestellte Kaminrohrabschnitt hat an der äußeren Oberfläche des äußeren Rohrs 2 Abschnitte zu seinem Verbinden mit anderen im Wesentlichen baugleichen Kaminrohrabschnitten.

Auf halber Höhe weist der Kaminrohrabschnitt eine erfindungsgemäße Reinigungstür auf. Diese umfasst einen Türrahmen 4 sowie ein Türblatt 5. Türrahmen 4 und Türblatt 5 haben jeweils einen gebogenen Verlauf, so dass sie sich an die abgerundete äußere Oberfläche des zylinderförmigen Kaminrohrabschnittes anschmiegen.

Der Türrahmen 4 ist an dem äußeren Rohr 1 des Kaminrohrabschnittes mit Hilfe von Nieten 6 befestigt. Das Türblatt 5 ist im Türrahmen 4 schwenkbar aufgehängt.

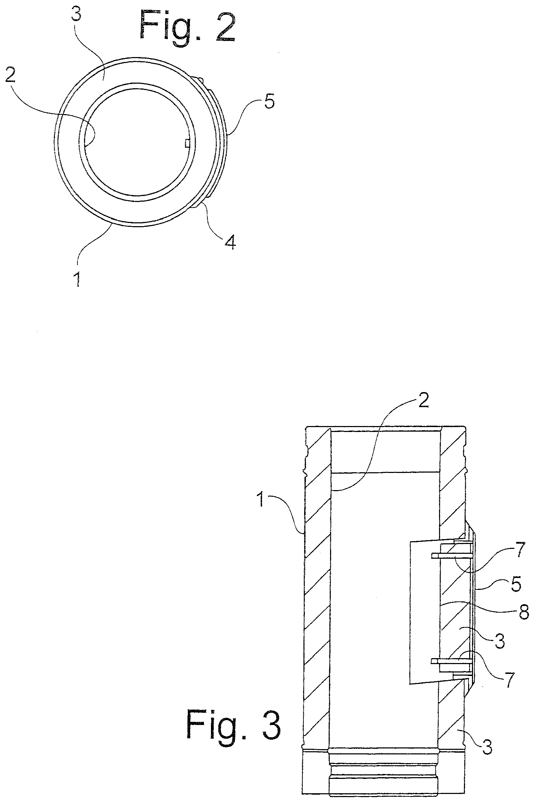

Figur 2 zeigt noch einmal die Anschmiegung des Türblattes 5 sowie des Türrahmens 4 an die im Schnitt kreisförmige Ausbildung des Kaminrohrabschnittes.

Figur 3 zeigt, dass das Türblatt 5 auf seiner dem Inneren des Kaminrohrabschnitts zugekehrten Seite gleichfalls mit Wärmeisoliermaterial 3 belegt ist. Dieses wird mit Hilfe von Bolzen 7 an dem Türblatt 5 gehalten. Zur schützenden Aufnahme des Wärmeisoliermaterials 3 ist an der Innenseite des Türblattes 5 ein Gehäuse 8 angeordnet. Dieses wird von den Bolzen 7 getragen, es nimmt das Wärmeisoliermaterial 3 vollständig auf.

## Patentansprüche

1. Reinigungstür für ein im Wesentlichen zylinderförmiges Abgasrohr, insbesondere für ein Kaminrohr beziehungsweise für einen Kaminrohrabschnitt, mit einem Türrahmen zum Aufnehmen zumindest eines Türblattes, wobei sowohl der Türrahmen als auch das Türblatt eine an die Ausbildung des Abgasrohrs angepasste gebogene Ausbildung aufweisen,
**dadurch gekennzeichnet,**
**dass** das Türblatt (5) an seiner dem Türrahmen (4) anzunähernden Seite ein Gehäuse (8) trägt, das mit einem Wärmeisoliermaterial (3) gefüllt ist.

2. Reinigungstür nach Anspruch 1, **dadurch gekennzeichnet, dass** das Türblatt (5) am Türrahmen (4) schwenkbar angelenkt ist.

3. Reinigungstür nach Anspruch 1 oder 2, **dadurch gekennzeichnet, dass** das Türblatt (5) Mittel zu seinem Verschließen am Türrahmen (4) aufweist.

4. Reinigungstür nach einem der vorhergehenden Ansprüche, **dadurch gekennzeichnet, dass** sowohl das Türblatt (5) und/oder der Türrahmen (4) mit Dichtelementen ausgerüstet ist beziehungsweise sind.

5. Reinigungstür nach einem der vorhergehenden Ansprüche, **dadurch gekennzeichnet, dass** der Türrahmen (4) Aufnahmen für Nietverbindungen (6) zum Abgasrohr hat.

## Claims

1. Cleaning door for a substantially cylindrical exhaust gas pipe, in particular for a chimney pipe or for a chimney pipe section, with a doorframe for accommodating at least one door leaf, wherein both the doorframe and also the door leave have an arched shape adapted to the configuration of the exhaust gas pipe, **characterized in that**
the door leaf (5) supports a housing (8) on its side proximate to the doorframe (4), said housing being filled with a heat-insulating material (3).

2. Cleaning door according to Claim 1, **characterized in that** the door leaf (5) is pivotably mounted on the doorframe (4).

3. Cleaning door according to Claim 1 or 2, **characterized in that** the door leaf (5) has means for locking to the doorframe (4).

4. Cleaning door according to any one of the preceding claims, **characterized in that** both the door leaf (5) and/or the doorframe (4) is/are equipped with sealing elements.

5. Cleaning door according to any one of the preceding claims, **characterized in that** the doorframe (4) has receptacles for rivet connections (6) to the exhaust pipe.

## Revendications

1. Trappe de visite, destinée à un tuyau de gaz de fumée de forme sensiblement cylindrique, notamment à un tuyau de cheminée, respectivement à un tronçon de tuyau de cheminée, pourvue d'un cadre de trappe destiné à recevoir au moins un battant de trappe, aussi bien le cadre de trappe qu'également le battant de trappe présentant une conception curviligne, adaptée à la conception du tuyau de gaz de fumée, **caractérisée en ce que** sur sa face qui doit être rapprochée du cadre de trappe (4), le battant de trappe (5) supporte un boîtier (8) qui est rempli d'un isolant thermique (3).

2. Trappe de visite selon la revendication 1, **caractérisée en ce que** le battant de trappe (5) est articulé de manière pivotante sur le cadre de trappe (4) .

3. Trappe de visite selon la revendication 1 ou 2, **caractérisée en ce que** le battant de trappe (5) comporte des moyens destinés à fermer le cadre de trappe (4).

4. Trappe de visite selon l'une quelconque des revendications précédentes, **caractérisée en ce qu'**aussi bien le battant de trappe (5) et/ou le cadre de trappe (4) est, respectivement sont muni(s) d'éléments d'étanchéité.

5. Trappe de visite selon l'une quelconque des revendications précédentes, **caractérisé en ce que** le cadre de trappe (4) dispose de logements pour des assemblages par rivetage (6) sur le tuyau de gaz de fumée.
